# EUROPÄISCHE PATENTSCHRIFT

(11) **EP 1 799 352 B1**
(45) Veröffentlichungstag und Bekanntmachung des Hinweises auf die Patenterteilung: **12.03.2008**
(21) Anmeldenummer: 05788628.5
(22) Anmeldetag: 24.09.2005
(51) Int. Cl.: B04B 13/00, F26B 25/22, F26B 11/04

(54) **TROCKNER UND VERFAHREN ZUM STEUERN EINES TROCKNERS**
DRYER AND METHOD FOR CONTROLLING A DRYER
SECHOIR ET PROCEDE DE COMMANDE D'UN SECHOIR

(30) Priorität: 09.10.2004 DE 102004049241
(43) Veröffentlichungstag der Anmeldung: 27.06.2007
(73) Patentinhaber: Sanofi-Aventis Deutschland GmbH, 65929 Frankfurt am Main (DE)
(72) Erfinder: REINHARDT, Jörg, 65510 Idstein (DE); WANDELT, Burkhard, 65860 Eschborn (DE); NAUMANN, Christoph, 61462 Königstein (DE)
(86) Internationale Anmeldenummer: PCT/EP2005/010367
(87) Internationale Veröffentlichungsnummer: WO 2006/040000

(56) Entgegenhaltungen:
- DE-A1- 10 153 353
- DE-A1- 19 645 923
- DE-C1- 4 441 350
- US-A- 4 557 719
- US-A1- 2002 118 366

## Beschreibung

Die Erfindung bezieht sich auf Trockner mit bewegtem Trockenraum, insbesondere auf Zentrifugentrockner, zum Trocknen eines Produkts, insbesondere eines insulinhaltigen Produkts, und auf ein Verfahren zum Steuern eines solchen Trockners, insbesondere eines Zentrifugentrockners, wobei eine NIR-Sonde zum Messen der Feuchte des Produkts vorgesehen ist.

Zentrifugentrockner sind im Stand der Technik bekannt. Es handelt sich dabei um Vorrichtungen, die die Möglichkeit bieten, die zwei Verfahrensschritte Zentrifugieren und Trocknen in einem Apparat zu kombinieren. Beispielweise finden sie bei der Isolierung von Pharmawirkstoffen Anwendungen, die eine Kombination von Zentrifugation und Trocknung in einem einzigen Aggregat erfordern und bei denen mittels des Zentrifugentrockners ein unbeabsichtigtes Freisetzen beim Transport von der Zentrifuge zum Trockner vermieden wird. Ferner finden sich weitere Anwendungen z.B. bei der Isolation oxidationsempfindlicher oder lichtempfindlicher Produkte oder bei aseptischen Prozessen.

DE-A 1 199 03 125 betrifft ein Verfahren zur Trocknung von Proteinkristallen ausgehend von einer wässrigen Proteinkristallsuspension in einem Zentrifugentrockner. Beispielsweise wird Insulin für die Herstellung von pharmazeutischen Zubereitungen in kristalliner Form eingesetzt. Für die Stabilität der Kristallstruktur benötigen Insulin-Kristalle einen optimalen Rest-Wassergehalt (zwischen 2 % und 10 %). Der Trocknungsprozess muss daher rechtzeitig abgebrochen werden, wenn dieser optimale Rest-Wassergehalt erreicht ist.

Die Steuerung des Trocknungsverlaufs in einem Zentrifugentrockner wird im Stand der Technik z.B. über zwei Kenngrößen realisiert. Einerseits wird eine Mindesttrocknungszeit in Abhängigkeit von der Beladung des Trockners festgelegt, andererseits wird die Trocknung bei Unterschreitung eines Grenzwertes der Feuchtigkeit des N₂-Trocknungsabgases abgebrochen. Zur Bestimmung der tatsächlichen Restfeuchte des getrockneten Produkts wird anschließend eine Probe des Produkts entnommen und mittels einer Karl Fischer Titration der Wassergehalt der Probe bestimmt. Die Durchführung gestaltet sich bei dieser Methode trotz halbautomatischer Geräte jedoch relativ aufwendig. Die notwendige Probenmenge für eine Bestimmung liegt im Bereich von einigen 100 mg. Der Zeitbedarf für eine Titration beträgt typischerweise 5 bis 20 Minuten. Die Nachteile der Methode liegen darin, dass die Proben aus dem Prozess entnommen werden müssen, so dass die Methode destruktiv und mit einem hohen Zeitbedarf verbunden ist. Außerdem sind besondere Chemikalien und ein geeigneter Abzug erforderlich.

DE-A1 101 53 353 schlägt eine Vorrichtung zur Bestimmung des Restflüssigkeitsgehaltes von Feststoffkuchen in Zentrifugen vor, bestehend wenigstens aus mindestens zwei Sensoren insbesondere Elektroden und einem mit den Sensoren verbundenen Messgerät zur Messung der Restfeuchte, insbesondere ein Leitfähigkeits- oder Kapazitätsmessgerät, wobei die Sensoren voneinander beabstandet im Bereich der Zentrifugentrommel angeordnet sind. Diese Vorrichtung hat jedoch den Nachteil, dass eine direkte Produktberührung der Sensoren besteht, so dass es zu Ablagerungen des Produktes an denselben kommen kann. Durch das Anbringen der Sensoren und des Messgerätes an der rotierenden Trommel ergeben sich weiterhin komplizierte Anordnungen zur Datenübertragung und zur Spannungsversorgung des Gerätes und es müssen Vorkehrungen zum Korrosionsschutz getroffen werden.

Eine weitere Vorrichtung zur produktberührenden Feuchtemessung in einem stationären (nicht rotierenden) Trockner ist Gegenstand der DE-A1 196 45 923. Dabei wird ein optischer Messkopf zur Online-Untersuchung der Feuchtigkeit agglomerierter Teilchen in Trocknern verwendet, der aus einer im Trockner vertikal angeordneten, topfförmigen, nach oben offenen Probenkammer und einem in der Probenkammer mit einem Messfenster abgeschlossenen optischen Sensor besteht, der ein für das von der Partikelprobe in der Probenkammer diffus reflektierte Licht charakteristisches Ausgangssignal erzeugt. Dieser Messkopf ist jedoch nicht für eine rotierende Zentrifugentrommel eines Zentrifugentrockners vorgesehen und geeignet.

EP-B1 0 891 814 betrifft ein weiteres Verfahren, bei welchem die OberflächenKuchenfeuchte in situ unter Verwendung einer Infrarotreflexion aus einem Kuchen von Feststoffen innerhalb der Trommel einer Trommelzentrifuge gemessen wird. Eine Kuchenfeuchte-Überwachungseinrichtung ist dabei in der Trommel angeordnet. Ein Nachteil dieses Verfahrens ist wiederum die Produktberührung der Kuchenfeuchte-Überwachungseinrichtung. Ferner kann dabei nur die Oberflächenfeuchte des Kuchens und nicht die mittlere Feuchte der Feststoffe bestimmt werden.

Der Erfindung liegt die Aufgabe zugrunde, die Nachteile des Standes der Technik zu vermeiden und insbesondere die Online-Bestimmung der Restfeuchte eines in einem Trockner mit bewegtem Trockenraum, insbesondere in einem Zentrifugentrockner, enthaltenen Materials ohne eine Produktberührung oder Produktentnahme zu ermöglichen.

Diese Aufgabe wird erfindungsgemäß gelöst durch einen Trockner mit bewegtem Trockenraum, insbesondere einen Zentrifugentrockner, zum Zentrifugieren und Trocknen eines Produkts, insbesondere eines insulinhaltigen Produkts. Der Trockner umfasst einen in einem Gehäuse um eine Achse drehbar gelagerten Trockenraum, insbesondere eine Zentrifugentrommel, die durch eine Stauscheibe verschließbar ist. Der Trockenraum, insbesondere die Stauscheibe der Zentrifugentrommel, enthält mindestens ein Fenster. Der Trockner umfasst ferner eine NIR-Sonde zur Durchführung einer Feuchtemessung an dem Produkt in dem geschlossenen Trockenraum, wobei die NIR-Sonde außerhalb des Trockenraums angeordnet und in mindestens einer Position des Trockenraums durch das mindestens eine Fenster auf das Produkt ausgerichtet ist.

Der Trockner ist dabei vorzugsweise so aufgebaut, dass der Trockenraum, insbesondere die Zentrifugentrommel, eine waagrecht angeordnete Achse besitzt und einen kompakten Mantel aufweist. In der Trommel befindet sich ein zylindrischer Siebkorb, der mit der Trommel fest verbunden ist. Für den Siebkorb können unterschiedliche Elemente wie Poroplate®, Spaltsiebe, Filtertücher oder spezielle Lochbleche verwendet werden. Die Filterfeinheit des Siebkorbes kann bis zu 1 µm betragen. Der Raum zwischen der porösen Mantelfläche des Siebkorbes und der kompakten Mantelfläche der Zentrifugentrommel ist radial in mehrere Kammern unterteilt. In der hinteren Stirnfläche der Zentrifugentrommel befinden sich Öffnungen, so dass während der Rotation der Zentrifugentrommel entweder von Außen ein Gas (z.B. ein Trocknungsgas) in die Kammern eingeleitet werden kann oder eine Flüssigkeit (z.B. die Mutterlauge einer Kristallsuspension) aus den Kammern nach Außen abgeleitet werden kann. Der Trockenraum ist vorne mit der Stauscheibe verschlossen, die mit dem Trockenraum rotiert. Bei ruhendem Trockenraum kann die Stauscheibe in axialer Richtung bewegt werden. Wenn die Stauscheibe zurückgefahren wird, wird z.B. eine feststehende kreisförmige Auslassbahn freigegeben, die dann vom Innenraum des Trockenraums zugänglich ist. Nachdem der Trockenraum geöffnet worden ist, kann der Trockenraum wieder langsam rotieren (um das trockene Produkt auszutragen). Bei dem für die vorliegende Erfindung eingesetzten Trockner sind jedoch auch andere, dem Fachmann bekannte Mechanismen zum Produktaustrag aus dem Trockner möglich, z.B. das Schieben des Produktes aus dem rotierenden Trockenraum mit Hilfe eines Trommeleinsatzes. Der Trockenraum ist von einem Gehäuse umgeben.

Der Durchmesser des Trockenraums, insbesondere der Zentrifugentrommel, beträgt bei der vorliegenden Erfindung vorzugsweise von 200 mm bis 1300 mm, die Mantellänge des Trockenraums vorzugsweise von 100 mm bis 600 mm.

Der Trockenraum, bei einem Zentrifugentrockner vorzugsweise die die Zentrifugentrommel verschließende Stauscheibe, enthält bei dem erfindungsgemäßen Trockner mindestens ein Fenster. Das Fenster hat bevorzugt eine Dicke von 10 mm bis 20 mm und ist in vorteilhafter Weise aus einem infrarotdurchlässigen Glas, z.B. Borosilikat 3.3 gefertigt. Dabei ist es insbesondere wichtig, dass das Fenster einen möglichst geringen Anteil der Strahlung der NIR-Sonde absorbiert oder reflektiert.

Die NIR-Sonde ist bei der vorliegenden Erfindung außerhalb des Trockenraums angeordnet und wechselwirkt mit dem in dem Trockenraum enthaltenen Produkt über das mindestens eine Fenster. Die NIR-Sonde dient zur Messung der Feuchte des in dem Trockenraum enthaltenen Produkts. Die Messung beruht auf einer spektroskopischen Methode, bei der diffuse Reflexion von Strahlung im nah-infraroten (NIR) Spektralbereich ermittelt wird. Eine solche im Stand der Technik bekannte NIR-Sonde enthält üblicherweise einen Messkopf mit Licht emittierenden und Licht empfangenden Lichtleiter. Außerhalb des Messkopfes sind die Licht empfangenden Lichtleitern mit dem Detektor eines Spektrometers und die Licht emittierenden Lichtleiter mit einer Lichtquelle verbunden. Eine solche NIR-Sonde ist z.B. die Faserbündel-Sonde Reflector der Solvias AG, Schweiz, die z.B. mit einem Spektrometer Matrix®-F der Bruker Optik GmbH, Deutschland, kombiniert werden kann. An das Spektrometer können mehrere NIR-Sonden von einem oder verschiedenen Trocknern gleichzeitig angeschlossen werden. Die Lichtquelle und der Detektor des Spektrometers werden dann gemeinsam von den NIR-Sonden genutzt. Beispielsweise besitzt das Matrix®-F der Bruker Optik GmbH sechs Kanäle zum Anschluss von sechs faseroptischen NIR-Sonden. Die Auswertung der Spektren und die Zuordnung der Spektren zu einer absoluten Produktrestfeuchte in Prozent erfolgt im sogenannten chemometrischen Modell, welches z.B. als Datei auf einem zu dem Spektrometer gehörenden Rechner hinterlegt ist. Der dort ermittelte Feuchtewert in Prozent wird z.B. via Profibus DP an ein Prozessleitsystem übermittelt.

Die NIR-Sonde ist bei der vorliegenden Erfindung in mindestens einer Position des Trockenraums auf eines der Fenster bzw. auf das Fenster in dem Trockenraum ausgerichtet, so dass das von der NIR-Sonde emittierte Licht das in dem Trockenraum enthaltene Produkt durch das Fenster beleuchtet und an dem Produkt reflektiertes Licht durch das Fenster in die NIR-Sonde eingekoppelt werden kann. Zur Durchführung einer Feuchtemessung wird der Trockenraum in dieser Position vorübergehend angehalten. Zur exakten Positionierung des Trockenraums und damit des Fensters relativ zu der nicht mitrotierten NIR-Sonde bei der Messung enthält der erfindungsgemäße Trockner, insbesondere der erfindungsgemäße Zentrifugentrockner, vorzugsweise einen Sensor zur Bestimmung des Drehwinkels des Trockenraums, insbesondere der Zentrifugentrommel.

Das Fenster befindet sich bei der besonderen Ausführungsform eines Zentrifugentrockners in der Messposition vorzugsweise im Bereich des unteren Randes der Stauscheibe. Dadurch wird gewährleistet, dass auch bei kleinen in dem als Zentrifugentrommel ausgestalteten Trockenraum enthaltenen Produktmengen in der Messposition das Fenster zumindest teilweise von Innen mit Produkt bedeckt ist, so dass es durch das Fenster mit NIR-Strahlung beleuchtet werden kann. Die NIR-Sonde ist aus den gleichen Gründen in der Messposition vorzugsweise auf den unteren Teil des Fensters ausgerichtet. Falls es zur optimalen Messung aufgrund von Eigenschaften der NIR-Sonde erforderlich ist, kann diese außerdem mit einem bestimmten Winkel (z.B. 20°) zur Horizontalen auf das Fenster ausgerichtet sein.

Der erfindungsgemäße Trockner hat den Vorteil, dass während der Trocknung die Feuchte des Produkts direkt gemessen werden kann. Dabei wird eine Produktberührung durch die Messanordnung vermieden, dadurch dass die NIR-Sonde vor dem Fenster außerhalb des Trockenraums, insbesondere vor dem in der Stauscheibe der Zentrifugentrommel enthaltenen Fenster, angeordnet ist. Der Trockenraum und der Siebkorb bleiben somit frei von Einbauten, wodurch Produktablagerungen verhindert werden. Es muss ferner keine Probe des Produkts zur Durchführung einer Feuchtemessung aus dem Trockner entnommen werden und es ist auch keine Probenvorbereitung dafür erforderlich.

Gemäß einer bevorzugten Ausführungsform der vorliegenden Erfindung hat die NIR-Sonde bei der Durchführung einer Feuchtemessung einen Abstand zu dem Fenster in dem Trockenraum, der kleiner als 2 mm, bevorzugt kleiner 1 mm ist. Durch die Einstellung eines solchen, möglichst geringen Abstandes können zuverlässige Messergebnisse für die Feuchte des Produktes erhalten werden.

Gemäß einer bevorzugten Ausführungsform des erfindungsgemäßen Trockners enthält die NIR-Sonde eine dem Trockenraum zugewandte Optik, wobei Mittel zur Spülung der Optik mit einem Gas vorgesehen sind. Ferner umfasst der erfindungsgemäße Trockner vorzugsweise eine Einrichtung zur Spülung des mindestens einen Fensters mit einem Gas. Somit kann eine sich gegebenenfalls auf der Optik der NIR-Sonde und auf der Außenseite des Fensters bildende Produktablagerung beseitigt werden, da diese das Messergebnis beeinflussen würde. Beispielsweise kann sich bei dem Zentrifugieren eines insulinhaltigen Produktes eine Staubschicht auf der Optik der NIR-Sonde und der Außenseite des Fensters bilden, da Bruchstücke von Insulinkristallen, die kleiner als die Poren der Siebtrommel sind, während des Trocknungsverlaufs die Siebtrommel passieren und von dort auf die Außenseite der Stauscheibe gelangen können. Das gemäß der vorliegenden Erfindung vorzugsweise vorgesehene Mittel zur Spülung der Optik und die Einrichtung zur Spülung des Fensters können z.B. die Optik und das Fenster vor jeder Messung durch mindestens einen Gaspuls (insbesondere einen Stickstoffpuls) frei blasen. Dazu kann z.B. eine Kapillare zum Leiten des Gases in die Optik der NIR-Sonde integriert sein.

Gemäß einer bevorzugten Ausführungsform des erfindungsgemäßen Trockners wird die NIR-Sonde in dem den Trockenraum umgebenden Gehäuse durch eine Armatur gehalten. Die Armatur gewährleistet die Halterung der NIR-Sonde an einer bestimmten Position und mit einem bestimmten Winkel in Bezug auf das Fenster in der Stauscheibe. Die Montage der Armatur erfolgt beispielsweise durch Einbringen einer Öffnung in das Gehäuse, an der ein spezieller Adapterflansch angebracht wird, der zur Befestigung der Armatur dient.

Gemäß einer bevorzugten Ausführungsform der vorliegenden Erfindung ist die Stauscheibe zum Öffnen und Schließen des Trockenraums axial verschiebbar und die NIR-Sonde wird durch eine mit dem Gehäuse verbundene Armatur gehalten, wobei die Armatur pneumatische Mittel zum axialen Verschieben der NIR-Sonde umfasst. Mit dieser Armatur kann die NIR-Sonde beim axialen Verschieben der Stauscheibe, z.B. zum Produktaustrag, ebenfalls axial verschoben werden, so dass die Optik der NIR-Sonde beim Öffnen des Trockenraums nicht durch die verschobene Stauscheibe beschädigt wird und dass die NIR-Sonde nach dem Schließen des Trockenraums wieder ausreichend nah an die Stauscheibe herangefahren und genau positioniert werden kann, um zuverlässige Feuchte-Messungen durchführen zu können. Die NIR-Sonde wird durch die Armatur z.B. über einen pneumatischen Antrieb verfahren.

Mittels zu der Armatur gehörenden Initiatoren können die Endlagen (Messposition und Stand-By-Position) angezeigt werden. Ein beispielsweise an der Armatur angebauter Faltenbalg erlaubt das Verfahren der NIR-Sonde ohne Gefahr der Kontamination.

Die Erfindung bezieht sich weiterhin auf ein Verfahren zum Steuern eines Trockners mit bewegtem Trockenraum, insbesondere eines Zentrifugentrockners, der einen in einem Gehäuse um eine Achse drehbar gelagerten Trockenraum mit mindestens einem Fenster, insbesondere eine Zentrifugentrommel, enthält, wobei das Verfahren die Verfahrensschritte umfasst:
- Einbringen eines Produkts, insbesondere eines insulinhaltigen Produkts, in den Trockenraum,
- Trocknen des Produkts, wobei der geschlossene Trockenraum rotiert,
- Messen der Restfeuchte in dem Produkt mit einer außerhalb des Trockenraums angeordneten NIR-Sonde durch das Fenster in dem Trockenraum und
- Beenden des Trocknens, wenn die gemessene Restfeuchte kleiner als eine Soll-Restfeuchte ist.

Für das erfindungsgemäße Verfahren treffen die oben genannten Aussagen zu dem erfindungsgemäßen Trockner ebenfalls zu, soweit sie anwendbar sind.

Zum Messen der Restfeuchte mit der NIR-Sonde wird das Produkt durch das Fenster mit NIR-Strahlung beleuchtet. Ein Teil der Strahlung wird von dem Wassergehalt in dem Produkt absorbiert. In dem zu der NIR-Sonde durch das Produkt zurückreflektierten Licht ist der wasserabhängige Teil abgeschwächt. Das zurückreflektierte Licht wird durch die NIR-Sonde z.B. per Lichtwellenleiter auf NIR-Detektoren gelenkt, deren Signale ein Maß für die Restfeuchte in dem Produkt darstellt.

Das erfindungsgemäße Verfahren kann z.B. mit einem proteinhaltigen, insbesondere einem insulinhaltigen Produkt durchgeführt werden. Bei der Herstellung von Humaninsulin wird im Anschluss an eine Vielzahl von Herstellungs- und Reinigungsschritten eine Insulin-Kristallsuspension durch eine Umkristallisation gewonnen. Diese Insulinkristallsuspension wird vorzugsweise mittels eines Stickstoffüberdrucks aus dem die Suspension enthaltenden Kristallisationsbehälter in den Siebkorb in einer Zentrifugentrommel eines erfindungsgemäßen Zentrifugentrockners gegeben. In dem Zentrifugentrockner werden dann die Kristalle aus der Suspension abfiltriert. Danach wird der nach dem Abfiltern in der Siebtrommel verbleibende Insulin-Filterkuchen mit Wasser gewaschen. Daraufhin wird der Insulin-Filterkuchen in mehreren Trocknungsschritten in dem Zentrifugentrockner getrocknet. Beispielsweise erfolgt das Trocknen zunächst durch eine Festbetttrocknung, dann wird der Insulin-Filterkuchen mit Hilfe einer Absprengdüse von dem Filterkorb abgesprengt und anschließend durch eine Wirbelschichttrocknung weitergetrocknet. Während des Trocknens wird erfindungsgemäß in festgesetzten zeitlichen Abständen die Restfeuchte in dem zu trocknenden Insulin mit Hilfe der NIR-Sonde bestimmt. Das Trocknen wird beendet, wenn das zu trocknende Insulin eine Soll-Restfeuchte erreicht hat, z.B. eine Restfeuchte von z.B. 10 % unterschreitet. Dann kann das fertige Insulin-Produkt aus dem Zentrifugentrockner ausgetragen werden. Das hier für Humaninsulin beschriebene Verfahren kann ohne weiteres auch bei der Trocknung von Insulinanaloga und Insulinderivaten angewendet werden. Daher bezieht sich die vorliegende Erfindung in bevorzugten Ausführungsformen auf erfindungsgemäße Verfahren zur Trocknung von Humaninsulin, Insulinanaloga und Insulinderivaten.

In einer bevorzugten Ausführungsform der vorliegenden Erfindung wird zum Trocknen des Produkts eine Festbetttrocknung, eine Wirbelschichttrocknung oder eine Kombination daraus in dem Trockner durchgeführt. Zur Festbetttrocknung wird erwärmtes, komprimiertes Gas eingesetzt. Der Feststoffkuchen wird dabei in dem Filterkorb von Innen nach Außen mit Trocknungsgas durchströmt. Durch die hierbei erzielten hohen Durchströmungsgeschwindigkeiten wird der Flüssigkeitsfilm an der Oberfläche der Feststoffpartikel lokal aufgerissen und die sich bildenden feinen dispersen Tröpfchen werden mit dem durchströmenden Gas durch den Filterkorb nach Außen abgeführt. Zur anschließenden Durchführung weiterer Verfahrensschritte wird der Filterkuchen durch Jet-Impuls-Gasstöße von der Filterkorbwand abgesprengt. Bei der Wirbelschichttrocknung wird das Trocknungsgas durch die Rückseite der Trommel in den Verfahrensraum geleitet, umströmt den Filterkuchen und verlässt den Trommelinnenraum wieder durch den Filterkorb, der nun als Partikelfilter dient. Hierdurch wird eine Wirbelschicht erzeugt, die durch das langsame Rotieren der Trommel ständig durchmischt wird.

Bei einer Kombination aus den beiden Trocknungsverfahren wird beispielsweise zuerst eine Festbetttrocknung und danach eine Wirbelschichttrocknung durchgeführt. Die Messung der Restfeuchte gemäß der vorliegenden Erfindung kann während der Durchführung eines oder beider Trocknungsverfahren erfolgen, wobei während der Wirbelschichttrocknung die mittlere Kuchenfeuchte und während der Festbetttrocknung die Oberflächenkuchenfeuchte bestimmt werden kann.

Gemäß einer bevorzugten Ausführungsform der vorliegenden Erfindung wird die Zentrifugentrommel zum Messen der Restfeuchte in definierten zeitlichen Abständen vorübergehend in einer bestimmten Position angehalten, wobei die Position mittels einer Drehwinkelmessung bestimmt wird. Die exakte Positionierung der Zentrifugentrommel und damit des Fensters relativ zu der NIR-Sonde bei der Feuchtemessung ist wichtig zum Erhalten von zuverlässigen Messergebnissen:

Gemäß einer bevorzugten Ausführungsform des erfindungsgemäßen Verfahrens werden nach dem Beenden des Trocknens zum Öffnen der Zentrifugentrommel und zum Austragen des Produkts eine die Zentrifugentrommel verschließende Stauscheibe und die NIR-Sonde axial von der Zentrifugentrommel weg verschoben. Das Verschieben der NIR-Sonde kann beispielsweise mit Hilfe einer oben beschriebenen Armatur erfolgen.

Ferner werden die NIR-Sonde und das Fenster vorzugsweise vor dem Messen der Restfeuchte des Produkts mit einem Gas gespült. Das zum Spülen verwendete Gas ist z.B. Stickstoff, der stoßartig auf das Fenster und die Optik der NIR-Sonde geblasen wird.

Gemäß einer bevorzugten Ausführungsform der vorliegenden Erfindung wird die NIR-Sonde zum Messen der Restfeuchte pneumatisch an das Fenster bis auf einen Abstand < 2 mm, bevorzugt < 1 mm herangefahren. Mit Hilfe einer pneumatischen Armatur kann die NIR-Sonde in dem Gehäuse verfahren und mit der notwendigen Genauigkeit positioniert werden. Dabei wird die NIR-Sdnde vorzugsweise in einem Raum, der den Anforderungen an aseptische Verfahren genügt, zu dem Fenster hin und von dem Fenster weg verfahren. Dies wird insbesondere durch erreicht, dass die Sonde in dem Raum innerhalb des Gehäuses vor dem Fenster durch ein Faltenbalg umgeben ist, so dass keine Keime von der bewegten NIR-Sonde in diesen Raum gelangen können, in dem bei zurückgefahrener Stauscheibe der Produktaustrag stattfindet. Der Raum erfüllt die Anforderungen an aseptische Verfahren, wenn keine Keime mittels mikrobiologischem Monitoring nachweisbar sind.

Gemäß einer weiteren Ausführungsform der Erfindung wird während der Festbetttrocknung das ringförmig auf der Filterfläche aufgebaute feuchte Produkt mit Hilfe von komprimiertem, temperiertem Stickstoff getrocknet, wobei der Filterkuchen hierbei von innen nach außen durchströmt wird. Hat sich der Filterkuchen soweit vor dem Schauglas aufgebaut, dass die Messposition der NIR-Sonde innerhalb des Insulinrings liegt und damit eine repräsentative Messung der Restfeuchte im Querschnitt des Filterkuchens möglich ist, sowie der Messort somit immer im gleichen Abstand zur Filteroberfläche liegt, kann eine zeitlich abnehmende Restfeuchte an dieser repräsentativen Stelle gemessen werden. Diese kann zur Steuerung der Festbetttrocknung herangezogen werden. Der Vorteil liegt im Erreichen immer derselben Restfeuchte, unabhängig von Behandlung und Produkteigenschaften (z.B. Kristallgröße) des zu trocknenden Produktes, z.B eines Proteins wie Insulins. Der Abbruch der Festbetttrocknung kann damit zum optimalen Zeitpunkt hinsichtlich etwaiger weiterer Aufarbeitungsschritte wie z.B. "Abreinigen" und / oder einer Wirbelschichttrocknung erfolgen.

Eine weitere Ausführungsform der Erfindung ist die Anwendung der im vorigen Absatz beschriebenen Verfahrensweise auf die Produktentfeuchtung bei Zentrifugationsprozessen. Zur Durchführung der Messung muss lediglich die Zentrifugentrommel angehalten werden und durch das Schauglas die Messung durchgeführt werden. Eine in Richtung des Schauglases verfahrbare Sonde wird weiterhin benötigt, um den geringen Abstand zum Schauglas (< 1 mm) realisieren zu können. Des weiteren ist es mit einer erfindungsgemäßen Vorrichtung möglich, die Sonde längs des Schauglases in Richtung der Filteroberfläche zu verfahren. Dies erlaubt die Aufnahme eines Feuchteprofils im Festbett in verschiedenen Abständen zur Filteroberfläche. Eine quantitative Bestimmung der Gesamtrestfeuchte im Trocknungsgut ist damit möglich.

Somit ist eine weitere Ausführungsform der Erfindung ein Verfahren zum Steuern eines Trockners wie oben beschrieben, dadurch gekennzeichnet, dass die Messposition der NIR-Sonde (4) sich an einer repräsentativen Stelle im Querschnitt des Filterkuchens und somit immer im gleichen Abstand zur Filteroberfläche befindet, und die zeitlich abnehmende Restfeuchte an dieser repräsentativen Stelle gemessen wird.

### Vergleichsbeispiel

In der nachfolgenden Tabelle 1 werden Ergebnisse von Trocknungsversuchen dargestellt, die auf der herkömmlichen Methode des Trocknungsabbruchs beruhen. Der Trocknungsabbruch wurde dabei nach der empirischen Formel Trocknungszeit (h) = Beladung (kg). 0,7 ermittelt.

Die Versuche wurden mit folgender technischer Apparatur durchgeführt:

Zentrifugentrockneranlage TZT - s der Firma FIMA mit folgenden Ausstattungsmerkmalen:
- steriles Design
- voll automatisiert
- Cleaning in Place (CIP) / Sanitisierung in Place (SIP)
- Trocknungsgasführung im open loop
- Explosionsschutz durch Sicherstellung der Inertatmosphäre im Trocknungsraum
- maximaler Betriebsüberdruck = 3 bar.

Vor dem finalen Trocknungsschritt in der Wirbelschichttrocknung wurden folgende Prozessschritte durchgeführt:
- Aufgabe einer Insulin-Kristallsuspension mittels Stickstoffüberdruck aus einem Kristallisationsbehälter auf die Trommel-Filterfläche des Zentrifugentrockners
- Waschen des Insulin-Filterkuchens
- Durchströmen des Insulin-Filterkuchens mit Stickstoff in einer Festbetttrocknung
- Absprengen des Insulin-Filterkuchens mit Hilfe der Absprengdüse
- Beginn der Wirbelschichttrocknungszeit.

Nach Beendigung der Trocknung und nach der Abfüllung wurde im Labor mit Hilfe einer Probe die Restfeuchte bestimmt (Karl Fischer Titration). In der folgenden Tabelle 1 sind die Ergebnisse aus 13 Versuchsläufen dargestellt, mit:
- Beladung = Masse eingesetztes Insulin in g,
- Zeit = Trocknungszeit in der Wirbelschicht in min und - Feuchte = nach Beendigung der Trocknung gemessene Wasser-Feuchte des Endprodukts (Karl Fischer Titration) in Massen-%.

| **Versuch** | **Beladung** | **Zeit** | **Feuchte** |
|---|---|---|---|
| 1 | 11984 | 554 | 4,1 |
| 2 | 15339 | 720 | 4,6 |
| 3 | 32686 | 2034 | 20,2 |
| 4 | 16172 | 736 | 5,4 |
| 5 | 16848 | 720 | 9,7 |
| 6 | 19536 | 860 | 2,5 |
| 7 | 19224 | 1160 | 13,6 |
| 8 | 20689 | 1020 | 1,9 |
| 9 | 27131 | 1138 | 6,5 |
| 10 | 29273 | 2358 | 7,4 |
| 11 | 27656 | 1302 | 7,8 |
| 12 | 26113 | 1448 | 4,1 |
| 13 | 26063 | 1380 | 11,6 |

Der Nachteil der herkömmlichen Methode ist ersichtlich in der Schwankungsbreite der resultierenden Endproduktfeuchten, die teilweise die vorgegebenen Spezifikationen nicht erfüllen.

### Beispiel

In der folgenden Tabelle 2 sind Ergebnisse der NIR-Feuchtemessung in einem erfindungsgemäßen Zentrifugentrockner nach dem erfindungsgemäßen Verfahren dargestellt. Vor der Wirbelschichttrocknung, während der die Restfeuchte mittels NIR-Messung ermittelt wurde, wurden die gleichen Prozessschritte wie im Vergleichsbeispiel mit einer Insulin-Kristallsuspension durchgeführt. Es handelte sich (wie in dem Vergleichsbeispiel) um den gleichen handelsüblichen Zentrifugentrockner, in den eine NIR-Sonde über eine pneumatische Wechselarmatur in das Zentrifugentrocknergehäuse eingeführt und dort positioniert wurde. Die Ergebnisse aus den 8 Versuchsläufen mit NIR-Feuchtemessung sind in der folgenden Tabelle 2 dargestellt, mit
- Beladung = Masse eingesetztes Insulin g,
- Zeit = Trocknungszeit in der Wirbelschicht in min,
- Feuchte KF = nach Beendigung der Trocknung gemessene Wasser-Feuchte des Endprodukts (Karl Fischer Titration) in Massen-% und
- Feuchte NIR = letzte Inline-Feuchtemessung (Produkt noch im Zentrifugentrockner) mittels der NIR-Sonde.

| **Vesuch** | **Beladung** | **Zeit** | **Feuchte KF** | **Feuchte NIR** |
|---|---|---|---|---|
| 1 | 9810 | 463 | 2,0 | 2,62 |
| 2 | 15737 | 764 | 3,9 | 3,97 |
| 3 | 11235 | 516 | 2,5 | 2,63 |
| 4 | 13464 | 636 | 3,3 | 3,16 |
| 5 | 15918 | 690 | 3,1 | 2,98 |
| 6 | 20608 | 957 | 2,6 | 2,62 |
| 7 | 21222 | 930 | 2,2 | 2,21 |
| 8 | 20973 | 864 | 3,1 | 2,90 |

Wie in Tabelle 2 ersichtlich ist, stimmt die erfindungsgemäße Feuchtemessung nach dem erfindungsgemäßen Verfahren mit dem erfindungsgemäßen Zentrifugentrockner sehr gut mit der Endproduktfeuchte nach Karl Fischer überein und erlaubt einen Abbruch der Wirbelschichttrocknung bei Erreichen der gewünschten Endproduktfeuchte.

Anhand der Zeichnung wird die Erfindung nachstehend näher erläutert.

Es zeigt:

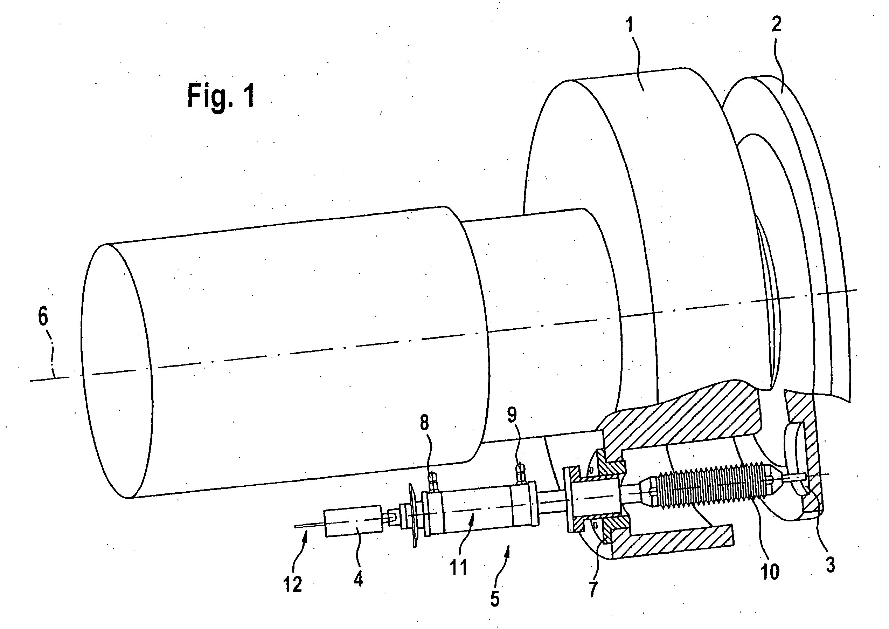

- Figur 1: einen Ausschnitt aus einem erfindungsgemäßen Trockner mit einer pneumatischen Armatur zur Halterung und Positionierung der NIR-Sonde.

Der Ausschnitt in Figur 1 stellt eine Baugruppe eines erfindungsgemäßen Trockners dar, wobei mit Bezugszeichen 1 ein Teil des Gehäuses bezeichnet wird, das die Stauscheibe 2 in geöffnetem Zustand enthält. Die Stauscheibe 2 enthält ein Fenster 3, an das eine NIR-Sonde 4 durch eine Armatur 5 herangeführt wird. Die Stauscheibe 2 ist mit der in Figur 1 rechts davon angeordneten (nicht dargestellten) Zentrifugentrommel um die Symmetrieachse 6 rotierbar. Die Stauscheibe 2 und die damit verbundene Zentrifugentrommel befinden sich in Figur 1 in der Position, in der die NIR-Sonde 4 durch das Fenster 3 auf das in der Zentrifugentrommel enthaltene Produkt ausgerichtet ist. Die NIR-Sonde 4 ist mit Hilfe der Armatur 5 axial (in Einbaurichtung, z.B. entlang Symmetrieachse 6) verschiebbar.

Die Armatur 5 umfasst einen Adapterflansch 7, mit dem die Armatur 5 an dem Gehäuseteil 1 befestigt ist. Ferner umfasst die Armatur 5 Anschlüsse 8, 9 zum Anschließen von (nicht dargestellten) Schläuchen, die die den pneumatischen Antrieb 11 mit Steuerluft versorgen. Die NIR-Sonde 4 umfasst eine Anschlussmöglichkeit 12 für einen (ebenfalls nicht dargestellten) Schlauch zum Zuführen eines Spülgases (z.B. Luft oder Stickstoff), zum Spülen der Optik der NIR-Sonde 4 und des Fensters 3 vor der Durchführung einer Messung. Des weiteren umfasst die Armatur 5 ein Faltenbalg 10, das ein Heranfahren an und ein Wegfahren der NIR-Sonde 4 von dem Fenster 3 unter sterilen Bedingungen ermöglicht. Das axiale Verschieben der NIR-Sonde 4 erfolgt dabei pneumatisch.

### Bezugszeichenliste

- 1: Teil des Gehäuses
- 2: Stauscheibe
- 3: Fenster
- 4: NIR-Sonde
- 5: Armatur
- 6: Symmetrieachse
- 7: Adapterflansch
- 8: erster Anschluss Steuerluft (Stand-By-Position)
- 9: zweiter Anschluss Steuerluft (Messpostion)
- 10: Faltenbalg
- 11: pneumatischer Antrieb der Armatur
- 12: Anschluss Spülleitung

## Patentansprüche

1. Trockner zum Trocknen eines Produkts mit einem rotierenden Trockenraum, der mindestens ein Fenster (3) enthält, **gekennzeichnet durch** eine NIR-Sonde (4) zur Durchführung einer Feuchtemessung an dem Produkt in dem geschlossenen Trockenraum, wobei die NIR-Sonde (4) außerhalb des Trockenraums angeordnet und in mindestens einer Position des Trockenraums **durch** das mindestens eine Fenster (3) auf das Produkt ausgerichtet ist.

2. Trockner gemäß Anspruch 1, **dadurch gekennzeichnet, dass** der Trockner ein Zentrifugentrockner und der Trockenraum eine Zentrifugentrommel ist, wobei die Zentrifugentrommel durch eine Stauscheibe (2) verschließbar ist

3. Trockner gemäß einem der Ansprüche 1 oder 2, **dadurch gekennzeichnet, dass** die NIR-Sonde (4) bei der Durchführung einer Feuchtemessung einen Abstand zu dem Fenster (3) hat, der kleiner als 2 mm ist.

4. Trockner gemäß einem der Ansprüche 1 bis 3, **dadurch gekennzeichnet, dass** die NIR-Sonde (4) eine dem Trockenraum zugewandte Optik enthält, wobei Mittel zur Spülung der Optik mit einem Gas vorgesehen sind.

5. Trockner gemäß einem der Ansprüche 1 bis 4, **gekennzeichnet durch** eine Einrichtung zur Spülung des mindestens einen Fensters (3) mit einem Gas.

6. Trockner gemäß einem der Ansprüche 2 bis 5, **dadurch gekennzeichnet, dass** die Stauscheibe (2) zum Öffnen und Schließen des Trockenraums axial verschiebbar ist und die NIR-Sonde (4) durch eine mit einem die Stauscheibe (2) umgebenden Gehäuse verbundene Armatur (5) gehalten wird, wobei die Armatur (5) Mittel zum axialen Verschieben der NIR-Sonde (4) umfasst.

7. Trockner gemäß einem der Ansprüche 1 bis 6, **dadurch gekennzeichnet, dass** das Produkt ein wasserhaltiges Protein ist.

8. Trockner gemäß einem der Ansprüche 1 bis 7, **dadurch gekennzeichnet, dass** das Produkt wasserhaltiges Insulin, ein Insulinanaloga oder ein Insulinderivat ist.

9. Verfahren zum Steuern eines Trockners, der einen in ein Gehäuse um eine Achse (6) drehbar gelagerten Trockenraum umfasst, der mindestens ein Fenster (3) enthält, **dadurch gekennzeichnet, dass** das Verfahren die Verfahrensschritte umfasst:
• Einbringen eines Produkts, insbesondere eines insulinhaltigen Produkts, in den Trockenraum,
• Trocknen des Produkts, wobei der geschlossene Trockenraum rotiert,
• Messen der Restfeuchte in dem Produkt mit einer außerhalb des Trockenraums angeordneten NIR-Sonde (4) durch das Fenster (3) in dem Trockenraum und
• Beenden des Trocknens, wenn die gemessene Restfeuchte kleiner als eine Soll-Restfeuchte ist.

10. Verfahren gemäß Anspruch 9, **dadurch gekennzeichnet, dass** zum Trocknen des Produkts eine Festbetttrocknung, eine Wirbelschichttrocknung, eine Zentrifugation oder eine Kombination daraus in dem Trockner durchgeführt wird.

11. Verfahren gemäß einem der Ansprüche 9 oder 10, **dadurch gekennzeichnet, dass** der Trockenraum zum Messen der Restfeuchte in definierten zeitlichen Abständen vorübergehend bei einer bestimmten Position angehalten wird, wobei die Position mittels einer Drehwinkelmessung bestimmt wird.

12. Verfahren gemäß einem der Ansprüche 9 bis 11, **dadurch gekennzeichnet, dass** nach dem Beenden des Trocknens zum Öffnen des Trockenraums und zum Austragen des Produkts eine den Trockenraum verschließende und das mindestens eine Fenster (3) enthaltende Stauscheibe (2) und die NIR-Sonde (4) axial von dem Trockenraum weg verschoben werden.

13. Verfahren gemäß einem der Ansprüche 9 bis 12, **dadurch gekennzeichnet, dass** die NIR-Sonde (4) und das Fenster (3) vor dem Messen der Restfeuchte des Produkts mit einem Gas gespült werden.

14. Verfahren gemäß einem der Ansprüche 9 bis 13, **dadurch gekennzeichnet, dass** die NIR-Sonde(4) zum Messen der Restfeuchte pneumatisch an das Fenster (3) bis zu einem Abstand < 2 mm herangefahren wird.

15. Verfahren gemäß einem der Ansprüche 9 bis 14, **dadurch gekennzeichnet, dass** die NIR-Sonde (4) in einem Raum, der den Anforderungen an aseptische Verfahren genügt, zu dem Fenster (3) hin und von dem Fenster (3) weg verfahren wird.

16. Verfahren gemäß einem der Ansprüche 9 bis 15, **dadurch gekennzeichnet, dass** die Messposition der NIR-Sonde (4) sich an einer repräsentativen Stelle im Querschnitt des Filterkuchens und somit immer im gleichen Abstand zur Filteroberfläche befindet, und die zeitlich abnehmende Restfeuchte an dieser repräsentativen Stelle gemessen wird.

17. Verwendung eines Verfahrens gemäß einem der Ansprüche 9 bis 16 zum Trocknen von wasserhaltigem Protein, insbesondere von wasserhaltigem Insulin.

## Claims

1. A dryer for drying a product, comprising a rotating drying compartment which contains at least one window (3), **characterized by** an NIR probe (4) for carrying out a moisture measurement on the product in the closed drying compartment, the NIR probe (4) being arranged outside the drying compartment and, in at least one position of the drying compartment, being oriented through the at least one window (3) toward the product.

2. The dryer as claimed in claim 1, **characterized in that** the dryer is a centrifugal dryer and the drying compartment is a centrifuge drum, the centrifuge drum being capable of being closed by a restrictor plate (2).

3. The dryer as claimed in either of claims 1 and 2, **characterized in that** the NIR probe (4) is a distance of less than 2 mm away from the window (3) when a moisture measurement is carried out.

4. The dryer as claimed in any of claims 1 to 3, **characterized in that** the NIR probe (4) contains an optical system facing the drying compartment, means for flushing the optical system with a gas being provided.

5. The dryer as claimed in any of claims 1 to 4, **characterized by** a device for flushing the at least one window (3) with a gas.

6. The dryer as claimed in any of claims 2 to 5, **characterized in that** the restrictor plate (2) is axially displaceable for opening and closing the drying compartment, and the NIR probe (4) is held by a fitting (5) connected to a housing surrounding the restrictor plate (2), the fitting (5) comprising means for the axial displacement of the NIR probe (4).

7. The dryer as claimed in any of claims 1 to 6, **characterized in that** the product is a water-containing protein.

8. The dryer as claimed in any of claims 1 to 7, **characterized in that** the product is water-containing insulin, an insulin analog or an insulin derivative.

9. A method for controlling a dryer which comprises a drying compartment which is mounted in a housing so as to be rotatable about an axis (6) and contains at least one window (3), **characterized in that** the method comprises the method steps:
• introduction of a product, in particular of an insulin-containing product, into the drying compartment,
• drying of the product, the closed drying compartment rotating,
• measurement of the residual moisture in the product using an NIR probe (4) arranged outside the drying compartment through the window (3) in the drying compartment and
• termination of the drying when the measured residual moisture is less than the required residual moisture content.

10. The method as claimed in claim 9, **characterized in that** fixed-bed drying, fluidized-bed drying, centrifuging or a combination thereof is carried out in the dryer for drying the product.

11. The method as claimed in either of claims 9 and 10, **characterized in that**, for measuring the residual moisture, the drying compartment is temporarily stopped at a certain position at defined time intervals, the position being determined by means of a measurement of the angle of rotation.

12. The method as claimed in any of claims 9 to 11, **characterized in that**, after the end of the drying, for opening the drying compartment and for discharging the product, a restrictor plate (2) closing the drying compartment and containing the at least one window (3), and the NIR probe (4), are moved axially away from the drying compartment.

13. The method as claimed in any of claims 9 to 12, **characterized in that that** the NIR probe (4) and the window (3) are flushed with a gas before the measurement of the residual moisture of the product.

14. The method as claimed in any of claims 9 to 13, **characterized in that** the NIR probe (4) is moved pneumatically to a distance of < 2 mm from the window (3) for measurement of the residual moisture.

15. The method as claimed in any of claims 9 to 14, **characterized in that** the NIR probe (4) is moved toward the window (3) and away from the window (3) in a space which meets the requirements for aseptic methods.

16. The method as claimed in any of claims 9 to 15, **characterized in that** the measuring position of the NIR probe (4) is at a representative point in the cross section of the filtercake and hence always the same distance away from the filter surface, and the residual moisture decreasing as a function of time is measured at this representative point.

17. The use of a method as claimed in any of claims 9 to 16 for drying water-containing protein, in particular water-containing insulin.

## Revendications

1. Séchoir pour sécher un produit comprenant une chambre de séchage rotative, laquelle comprend au moins une fenêtre (3), **caractérisé par** une sonde NIR (4) pour effectuer une mesure d'humidité sur le produit dans la chambre de séchage fermée, la sonde NIR (4) étant disposée à l'extérieur de la chambre de séchage et étant dirigée sur le produit à travers l'au moins une fenêtre (3) dans au moins une position de la chambre de séchage.

2. Séchoir selon la revendication 1, **caractérisé en ce que** le séchoir est un séchoir centrifuge et la chambre de séchage est un tambour centrifuge, le tambour centrifuge pouvant être fermé par un diaphragme (2).

3. Séchoir selon l'une des revendications 1 ou 2, **caractérisé en ce que** la sonde NIR (4), lors de la réalisation d'une mesure d'humidité, est espacée de moins de 2 mm de la fenêtre (3).

4. Séchoir selon l'une des revendications 1 à 3, **caractérisé en ce que** la sonde NIR (4) comprend une optique faisant face à la chambre de séchage, des moyens de rinçage de l'optique avec un gaz étant prévus.

5. Séchoir selon l'une des revendications 1 à 4, **caractérisé par** un dispositif de rinçage de l'au moins une fenêtre (3) avec un gaz.

6. Séchoir selon l'une des revendications 2 à 5, **caractérisé en ce que** le diaphragme (2) peut coulisser dans le sens axial pour ouvrir et fermer la chambre de séchage et la sonde NIR (4) est maintenue par une ferrure (5) reliée à un boîtier qui entoure le diaphragme (2), la ferrure (5) comprenant des moyens pour déplacer la sonde NIR (4) dans le sens axial.

7. Séchoir selon l'une des revendications 1 à 6, **caractérisé en ce que** le produit est une protéine aqueuse.

8. Séchoir selon l'une des revendications 1 à 7, **caractérisé en ce que** le produit est de l'insuline aqueuse, un équivalent de l'insuline ou un dérivé de l'insuline.

9. Procédé pour commander un séchoir qui comprend une chambre de séchage monté de manière à pouvoir tourner autour d'un axe (6), lequel comprend au moins une fenêtre (3), **caractérisé en ce que** le procédé comprend les étapes suivantes :
- introduction d'un produit, notamment un produit contenant de l'insuline, dans la chambre de séchage,
- séchage du produit, la chambre de séchage fermée étant en rotation,
- mesure de l'humidité résiduelle dans le produit à travers la fenêtre (3) avec une sonde NIR (4) disposée à l'extérieur de la chambre de séchage et
- fin du séchage lorsque l'humidité résiduelle mesurée est inférieure à l'humidité résiduelle de consigne.

10. Procédé selon la revendication 9, **caractérisé en ce qu'**un séchage à lit fixe, un séchage à lit fluidisé, une centrifugation ou une combinaison de ceux-ci est effectué dans le séchoir pour sécher le produit.

11. Procédé selon l'une des revendications 9 ou 10, **caractérisé en ce que** la chambre de séchage est maintenue provisoirement dans une position prédéfinie à intervalles donnés en vue d'effectuer la mesure, la position étant déterminée au moyen d'une mesure de l'angle de rotation.

12. Procédé selon l'une des revendications 9 à 11, **caractérisé en ce qu'**après la fin du séchage, pour ouvrir la chambre de séchage et pour sortir le produit, un diaphragme (2) fermant la chambre de séchage et contenant au moins une fenêtre (3) ainsi que la sonde NIR (4) sont éloignés de la chambre de séchage dans le sens axial.

13. Procédé selon l'une des revendications 9 à 12, **caractérisé en ce que** la sonde NIR (4) et la fenêtre (3) sont rincées avec un gaz avant de mesurer l'humidité résiduelle du produit.

14. Procédé selon l'une des revendications 9 à 13, **caractérisé en ce que** la sonde NIR (4), pour mesurer l'humidité résiduelle, est rapprochée pneumatiquement de la fenêtre (3) jusqu'à une distance < 2 mm.

15. Procédé selon l'une des revendications 9 à 14, **caractérisé en ce que** la sonde NIR (4) est rapprochée et éloignée de la fenêtre (3) dans un espace qui satisfait aux exigences relatives aux procédés aseptisés.

16. Procédé selon l'une des revendications 9 à 15, **caractérisé en ce que** la position de mesure de la sonde NIR (4) se trouve en un endroit représentatif dans la section transversale du gâteau de filtre et ainsi toujours à la même distance de la surface du filtre et l'humidité résiduelle, qui diminue dans le temps, est mesurée en cet endroit représentatif.

17. Utilisation d'un procédé selon l'une des revendications 9 à 16 pour sécher une protéine aqueuse, notamment de l'insuline aqueuse.
